# EUROPÄISCHE PATENTANMELDUNG

(11) **EP 4 759 742 A2**
(43) Veröffentlichungstag der Anmeldung: **17.06.2026**
(21) Anmeldenummer: 26170227.8
(22) Anmeldetag: 07.10.2016
(51) Int. Cl.: B65D 1/02

(54) **BEHÄLTNIS ZUR AUFNAHME EINER ENTERALEN NÄHRSTOFFLÖSUNG**

(30) Priorität: 09.10.2015 EP 15189118
(62) Teilanmeldung aus: 23193912.5
(71) Anmelder: Fresenius Kabi Deutschland GmbH, 61352 Bad Homburg (DE)
(72) Erfinder: BRANDENBURGER, Torsten, 61352 Bad Homburg (DE); EBERT, Christian, 61352 Bad Homburg (DE); SCHWERER, Stefan, 61352 Bad Homburg (DE)
(74) Vertreter: Fresenius Kabi Deutschland GmbH

(57) **Zusammenfassung**

Die Erfindung betrifft ein Behältnis (1) zur Aufnahme einer enteralen Nährstofflösung, mit einer Öffnung (2), über die eine enterale Nährstofflösung in das Behältnis (1) hinein oder aus dem Behältnis (1) heraus gebracht werden kann; einem Boden (3), der der Öffnung (2) in einer Längserstreckungsrichtung des Behältnisses (L1) gegenüberliegt und der dazu dient, das Behältnis (1) auf einem Untergrund aufrecht abzustellen; einem an dem Boden (3) angeordneten Aufhängelement (4), das in einer ersten Position, in der es sich im Wesentlichen entlang dem Boden (3) erstreckt, oder in einer zweiten Position, in der es winklig von der durch den Boden (3) definierten Ebene absteht, vorliegen kann; und einer Scharniereinrichtung (8), die das Aufhängelement (4) an einem ersten Ende (7) des Aufhängelements mit dem Boden (3) verbindet und die dafür vorgesehen und eingerichtet ist, dass das Aufhängelement (4) von der ersten Position in die zweite Position überführt werden kann. Die Erfindung zeichnet sich dadurch aus, dass in dem Boden (3) ein Aufnahmebereich (13) für das Aufhängelement (4) ausgebildet ist, in welchem das Aufhängelement (4) in der ersten Position mittels einer Verbindungseinrichtung (10, 22) lösbar fixiert werden, wobei das Aufhängelement (4) in der ersten Position nicht starr sondern innerhalb der ersten Position beweglich fixiert ist.

## Beschreibung

Die vorliegende Erfindung betrifft ein Behältnis zur Aufnahme einer enteralen Nährstofflösung gemäß dem Oberbegriff des Anspruchs 1.

Bei Behältnissen zur Aufnahme einer enteralen Nährstofflösung, die häufig als Flaschen ausgestaltet sind, besteht regelmäßig der Wunsch, sie einerseits sicher lagern zu können und andererseits einfach zur Abgabe einer in dem Behältnis enthaltenen enteralen Nährstofflösung einsetzen zu können.

Aus der US 5,123,554 A ist eine Flasche bekannt, die zur Befüllung mit einer hitzesensitiven Nährstofflösung vorgesehen ist. Dabei weist diese Flasche eine Aufhängeinrichtung auf, die an der Unterseite ihres Bodens angeformt ist. Die Aufhängvorrichtung erstreckt sich dabei in diagonaler Richtung fast über die gesamte Breite der Flasche und erfordert eine entsprechend aufwendige Ausgestaltung des Flaschenbodens. Die breite Ausführung der Aufhängeinrichtung wurde offenbar deshalb gewählt, um für eine gute Kraftübertragung zwischen einer Aufhängvorrichtung, an der die Flasche befestigt werden kann, und der Flasche selbst zu sorgen. In der Praxis hat sich bei derartigen Aufhängeinrichtungen jedoch gezeigt, dass sie trotz einer verhältnismäßig großen Breite sehr stabil ausgeführt werden müssen, um ein unbeabsichtigtes Abreißen zu verhindern. Denn wenn eine derartige Aufhängeinrichtung versehentlich an einer Seite eingerissen wird, reißt sie leicht über die gesamte Breite auf. Da sich die Aufhängeeinrichtung über fast den gesamten Boden der Flasche erstreckt, kann ein unbeabsichtigtes Einreißen leicht vorkommen. Denn mit dieser breiten Ausgestaltung existieren mehrere Ansatzpunkte für entsprechende Kräfte, über die ein unbeabsichtigtes Einreißen der Aufhängeinrichtung erfolgen kann. Zudem kann ein derart ausgestalteter Hänger die Standfestigkeit der Flasche beeinträchtigen, zum Beispiel beim Abstellen auf einem Tisch. In der WO 2014/143415 A1 ist eine Flasche mit einem beweglichen Hänger sowie eine Vorrichtung und ein Verfahren zu seiner Herstellung beschrieben.

In der US 3,581,928 ist ein Behälter für medizinische Flüssigkeiten beschrieben, der an seinem Boden einen Hänger aufweist. Um den Behälter auf einer flachen Oberfläche abstellen zu können, wird der Hänger in eine Position überführt, in welcher er einen am Behälterboden angeordneten Ansatz hintergreift und einschnappend fixiert ist.

Aus der WO 2014/078404 A1 ist eine alternative Ausgestaltung eines Flaschenbodens einer Flasche zur Aufnahme einer enteralen Nährlösung bekannt, bei der die vorgenannten Probleme nicht auftreten. So ist bei dieser Flasche eine aufwendige Bodenausgestaltung mit einem voluminösen Einschnitt vorgesehen, um zwischen den nicht eingeschnittenen Abschnitten des Bodens eine Aufhängeinrichtung auszubilden. Diese Aufhängeinrichtung ist nicht beweglich gelagert, was mit Einschränkungen im Bedienkomfort der Flasche einhergeht. Darüber hinaus erfordert die aufwendige Bodenausgestaltung eine größere Materialstärke im Bodenbereich und ein aufwendigeres Herstellungsverfahren der gesamten Flasche.

Der vorliegenden Erfindung liegt die Aufgabe zugrunde, ein Behältnis zur Aufnahme einer enteralen Nährstofflösung bereitzustellen, bei dem aus dem Stand der Technik bekannte Nachteile überwunden sollen. Insbesondere soll ein Behältnis bereitgestellt werden, das einfach mit einer Aufhängeinrichtung an einem Haken "kopfüber" befestigt, aber auch sicher auf einer Ablagefläche, wie z.B. einem Tisch, positioniert werden kann. Insbesondere soll die Aufhängeinrichtung im praktischen Einsatz stabiler als die aus dem Stand der Technik bekannten Lösungen ausgeführt sein, gleichzeitig aber weniger aufwendig und unter weniger Materialeinsatz herstellbar ist. Weiterhin soll auch die Handhabung der Aufhängeinrichtung verbessert werden.

Diese Aufgabe wird mit einem Behältnis zur Aufnahme einer enteralen Nährstofflösung mit den Merkmalen des Anspruchs 1 gelöst.

Ein derartiges Behältnis weist eine Öffnung auf, über die eine enterale Nährstofflösung, die auch als enterale Nährlösung bezeichnet werden kann, in das Behältnis hinein oder aus dem Behältnis heraus gebracht werden kann. Ferner weist das Behältnis einen Boden auf, der der Öffnung in einer Längserstreckungsrichtung des Behältnisses gegenüberliegt und der dazu dient, das Behältnis auf einem Untergrund aufrecht abzustellen. Wenn das Behältnis also auf dem Boden steht, weist die Öffnung des Behältnisses vom Boden weg nach oben. Das Behältnis weist ferner ein an einer Unterseite des Bodens angeordnetes Aufhängelement auf, das in zwei Positionen vorliegen kann. In einer ersten Position erstreckt es sich im Wesentlichen entlang dem Boden des Behältnisses, beispielsweise parallel zu einer durch den Boden definierten Ebene entlang einer Außenseite des Bodens. In einer zweiten Position steht es winklig, beispielsweise senkrecht, von der durch den Boden definierten Ebene ab.

Wenn sich das Aufhängelement in seiner ersten Position befindet, kann das Behältnis in einem Befüllzustand oder in einem Lagerzustand vorliegen, in dem es befüllt oder gelagert werden kann. Zu diesem Zweck kann das Behältnis insbesondere auf seinem Boden stehend verwendet werden. Mit dem Aufhängelement in seiner ersten Position kann das Behältnis auch als Trinkbehältnis, z.B. Trinkflasche, verwendet werden. Wenn sich das Aufhängelement in seiner zweiten Position befindet, kann das Behältnis mit der Öffnung nach unten weisend an einer Aufhängvorrichtung, wie etwa einem Haken oder einem Ständer, aufgehängt werden. Man kann in diesem Fall auch, insbesondere in Verbindung mit einem angeschlossenen Überleitsystem, vom Abgabezustand bzw. Verwendungszustand des Behältnisses sprechen.

Ferner weist das Behältnis eine Scharniereinrichtung auf, die das Aufhängelement an einem ersten Ende des Aufhängelementes mit der Unterseite des Bodens verbindet. Die Scharniereinrichtung dient dazu, das Aufhängelement von der ersten Position in die zweite Position und von der zweiten Position und erste Position überführen zu können. Das heißt, mittels der Scharniereinrichtung kann das Aufhängelement von einer Position in die jeweils andere Position umgeklappt werden. Dabei ist es vorgesehen und angedacht, dass durch die Positionswechsel des Aufhängelementes ein wiederholter Wechsel der Zustände des Behältnisses erreicht werden kann. So kann das Behältnis zum Beispiel zunächst in seinem Befüllzustand vorliegen, um anschließend in seinen Verwendungszustand überführt zu werden. Sofern nicht die gesamte in dem Behältnis vorhandene enterale Nährstofflösung eingesetzt wird, kann das Behältnis anschließend wieder in seinen Lagerzustand überführt werden, nämlich durch Überführen des Aufhängelementes von der zweiten Position in die erste Position. Später kann das Aufhängelement wieder von der ersten Position in die zweite Position und damit das Behältnis von dem Lagerzustand in den Verwendungszustand überführt werden.

Erfindungsgemäß zeichnet sich das Behältnis dadurch aus, dass in dem Boden ein Aufnahmebereich für das Aufhängelement ausgebildet ist, in dem das Aufhängelement in der ersten Position mittels einer Verbindungseinrichtung lösbar fixiert werden kann. Dadurch kann das Aufhängelement sicher in dem Aufnahmebereich positioniert werden. Durch ein gezieltes Lösen oder Öffnen der Verbindungseinrichtung soll das Aufhängelement von seiner ersten in seine zweite Position überführt werden. Beispielsweise kann eine Schrägstellung des Behältnisses durch ein nicht beabsichtigtes winklig abstehendes Aufhängelement im Wesentlichen vermieden werden. Vorzugsweise ist der Aufnahmebereich für den Hänger als eine Vertiefung in dem Boden des Behältnisses ausgeführt. Erfindungsgemäß oder vorzugsweise ist das Aufhängelement in der ersten Position nicht starr sondern innerhalb der ersten Position beweglich fixiert. Erfindungsgemäß oder vorzugsweise ist das zweite freie Ende des Aufhängelements innerhalb der ersten Position von oben nach unten bewegbar oder beweglich fixiert. Dadurch wird insbesondere das Lösen des Aufhängelements aus seiner ersten Position erleichtert, da ein manueller Eingriff, beispielsweise mittels einer Fingerkuppe und/der eines Fingernagels, zwischen dem Hänger und dem Boden des Behältnisses bzw. dem Boden des Aufnahmebereichs erleichtert wird.

In einer ergänzenden oder alternativen erfindungsgemäßen Ausgestaltung zeichnet sich das Behältnis dadurch aus, dass sich die Scharniereinrichtung lediglich über eine Breite des Aufhängelementes erstreckt, die der Breite eines zweiten Endes des Aufhängelementes, welches dem ersten Ende des Aufhängelementes in einer Längserstreckungsrichtung des Aufhängelements gegenüberliegt, entspricht. Als "Breite" ist dabei eine Ausdehnung in derjenigen Richtung definiert, die sich quer zu der Längserstreckungsrichtung des Aufhängelements erstreckt. Im Rahmen der vorliegend beanspruchten Erfindung entsprechen zwei Breiten (bzw. zwei Längen oder zwei andere Abschnitte) einander, wenn sie bis zu 50%, insbesondere in Bezug auf die größere Breite, insbesondere bis zu 30%, voneinander abweichen. In einer alternativen oder ergänzenden Ausgestaltung der Erfindung erstreckt sich die Scharniereinrichtung über eine Breite, die kleiner ist als die Breite des zweiten Endes des Aufhängelementes. In einer Variante können zwei einander entsprechende Breiten, Längen oder Abschnitte auch identisch oder im Wesentlichen identisch zueinander.

Durch eine solche, an die Abmessungen des zweiten Endes der Aufhängeinrichtung angepasste Scharniereinrichtung mit einer gegenüber dem Stand der Technik reduzierter Breite wird einerseits weniger Material benötigt, um die Scharniereinrichtung herzustellen. Ferner wird der Platzbedarf, den die Scharniereinrichtung in ihrer ersten Position benötigt, signifikant reduziert. Dies sorgt für eine größere Freiheit bei der Ausgestaltung des Bodens des Behältnisses. Darüber hinaus gibt es für Kräfte, mittels derer die Scharniereinrichtung abgerissen oder anderweitig zerstört werden könnte, weniger Ansatzpunkte. Schließlich ist auch die Kraftübertragung auf die Scharniereinrichtung verbessert, wenn eine Kraft auf die Aufhängeinrichtung an dem zweiten Ende der Aufhängeinrichtung, beispielsweise mit einem Finger, aufgebracht wird.

Demgegenüber ist bei Scharniereinrichtungen, welche aus dem Stand der Technik bekannt sind, die Krafteinleitung in solche Bereiche, die weiter entfernt von der maximalen Breitenausdehnung des zweiten Endes der Aufhängeinrichtung angeordnet sind, ungünstiger. Hier muss regelmäßig mit einer größeren Kraft im Bereich des zweiten Endes der Aufhängeinrichtung gearbeitet werden, um ein Überführen der Aufhängeinrichtung von der einen in die andere Position zu erreichen. Dies kann dann wiederum zu ungewollten Zerstörungen der Scharniereinrichtung führen.

Im Vergleich zu ebenfalls aus dem Stand der Technik bekannten Lösungen, bei denen gar keine Scharniereinrichtung vorgesehen ist, sondern eine Aufhängeinrichtung dauerhaft zugänglich ist, ergibt sich bei dieser erfindungsgemäßen Ausführungsform der Vorteil, dass der Boden des Behältnisses weitaus weniger aufwendig und mit einer geringeren Materialstärke hergestellt werden kann. Dies erleichtert den Herstellungsprozess eines entsprechenden Behältnisses und reduziert die Herstellungskosten.

Ferner kann eine unbeabsichtigte Krafteinleitung auf das Aufhängelement wesentlich reduziert werden, wenn das Aufhängelement sicher in dem Aufnahmebereich durch die Verbindungseinrichtung positioniert oder fixiert ist.

Die erfindungsgemäße Verbindungseinrichtung ist eine lösbare Verbindungseinrichtung. Vorzugsweise ist das Aufhängelement mittels der Verbindungseinrichtung wiederholt fixierbar in und wieder lösbar aus seiner ersten Position. Das Aufhängelement kann hierbei wiederholt von der ersten in die zweite Position überführt werden und umgekehrt. In einer erfindungsgemäßen Variante wird die Verbindungseinrichtung durch eine Schnappverbindung bereitgestellt ist. Dies stellt eine einfach herzustellende Verbindungsart dar.

Zur Bereitstellung der Verbindungseinrichtung, insbesondere der Schnappverbindung, weist in einer Ausführungsform das Aufhängelement in einem Bereich seines zweiten Endes mindestens einen Vorsprung auf, der dazu vorgesehen und eingerichtet ist, eine Struktur des Aufnahmebereichs zu hintergreifen, um das Aufhängelement in der ersten Position zu fixieren. Der mindestens eine Vorsprung dient dazu, eine Struktur des Bodens, insbesondere des Aufnahmebereichs, vorzugsweise hinterschnittartig zu hintergreifen, um das Aufhängelement in der ersten Position zu fixieren. Beispielsweise kann der Vorsprung dazu vorgesehen und eingerichtet sein, in eine entsprechende Struktur des Bodens eingeklickt zu werden. Dann ist die Standsicherheit des Behältnisses gewährleistet, wenn das Aufhängelement in der ersten Position fixiert ist. Gleichzeitig kann durch Aufbringung einer Kraft, die größer als oder gleich wie die Haltekraft des Aufhängelementes in der ersten Position ist, eine Freigabe des Aufhängelementes erfolgen, sodass es anschließend in die zweite Position überführt werden kann, wenn das Behältnis in seinen Verwendungszustand überführt werden soll. Vorzugsweise wird die Struktur durch wenigstens eine seitliche Vertiefung in dem Aufnahmebereich bereitgestellt.

Wie vorstehend bereits ausgeführt ist, ist das Aufhängelement in der ersten Position nicht starr sondern innerhalb der ersten Position beweglich fixiert ist. Das zweite freie Ende des Aufhängelements ist innerhalb der ersten Position von oben nach unten beweglich fixiert. Dadurch wird insbesondere das Lösen des Aufhängelements aus seiner ersten Position erleichtert, da ein manueller Eingriff, beispielsweise mittels einer Fingerkuppe und/der eines Fingernagels, zwischen dem Hänger und dem Boden des Behältnisses ermöglicht oder zumindest erleichtert wird. Diese Beweglichkeit des Aufhängelements wird in einer Ausführungsform dadurch erreicht oder zumindest unterstützt, dass das Scharnier auf einem Sockel angeordnet ist, der den Übergang zu dem Boden des Behältnisses bereitstellt. Vorzugsweise weist der Sockel an einer dem Behältnisboden gegenüberliegenden Seite einen Grat auf, an welchem das Scharnier ansetzt. Dadurch kann die Beweglichkeit in der ersten Position unterstützt werden. Alternativ oder ergänzend wird die Beweglichkeit des Aufhängelements auch dadurch erreicht, dass eine Dicke des zweiten, freien Endes des Aufhängelements, insbesondere des Aufhängelements, kleiner gewählt ist als die Höhe des Aufnahmebereichs für den Hänger. Durch die gewählten Formen und/oder Abmessungen wird in der ersten Position des Hängers ein Spiel zwischen dem Hänger und dem Aufnahmebereich bereitgestellt. Insbesondere kann der Hänger dadurch recht leicht aus seiner ersten Position gelöst und wieder in diese gebracht werden.

Eine weitere Ausführungsform ist dadurch gekennzeichnet, dass zwischen dem zweiten freien Ende des Aufhängelementes und dem Scharnier eine Einbuchtung oder Einschnürung ausgebildet ist. Die Einbuchtung stellt eine Art Griffbereich, beispielsweise für den Zeigefinger und den Daumen, bereit und kann das Aufhängen des Behältnisses unterstützen. Vorzugsweise ist die Einschnürung zumindest abschnittsweise konkav ausgeführt. Diese nach innen gerichtete Wölbung ermöglicht insbesondere ein ergonomisches Greifen des Hängers mit den Fingern.

Vorzugsweise besitzt der Aufnahmebereich für das Aufhängelement eine von einer Außenseite zur Längsachse des Behältnisses hin abnehmende Höhe. Dadurch kann zum einen die Länge des Aufhängelements vergrößert und dadurch die Handhabbarkeit in der zweiten Position des Aufhängelements verbessert werden. Zum anderen kann das Aufhängelement immer noch sicher in dem Aufnahmebereich in seiner ersten Position gelagert werden, ohne seitlich überzustehen. Vorzugsweise wird der Aufnahmebereich, ausgehend vom dem Scharnier, insbesondere dem Sockel, durch zumindest drei Abschnitte gebildet, einen ersten inneren Abschnitt, der über einen ersten inneren Kick in einen zweiten mittleren Abschnitt übergeht. Dieser geht wiederum über einen zweiten äußeren Knick in einen dritten äußeren Abschnitt über. Der erste innere Abschnitt verläuft im Wesentlichen quer, vorzugsweise senkrecht zur Behälterlängsachse. Der zweite mittlere Abschnitt bildet eine, vorzugsweise gerade, Rampe. Der äußere dritte Abschnitt bildet hier eine kürzere Rampe mit größerer Steigung. Der erste Knick und/oder der zweite Knick können durch einen winkligen Übergang oder durch einen abgerundeten Übergang bereitgestellt werden.

Es können noch weitere bauliche Maßnahmen vorgenommen werden, um das manuelle Eingreifen in den Aufnahmebereich zum Lösen des Hängers aus seiner fixierten, ersten Position ergänzend oder alternativ zu unterstützen. Beispielsweise oder Erfindungsgemäß kann der Aufnahmebereich zur Außenseite des Behältnisses hin einen Knick, vorzugsweise den zweiten Knick, aufweisen, insbesondere in Richtung der Öffnung des Behältnisses hin. Dadurch kann die Öffnung zum Eingreifen bzw. zum Untergreifen des Aufhängelements vergrößert werden. Alternativ und/oder ergänzend kann eine obere Kante des Aufnahmebereichs zumindest abschnittsweise konkav ausgeführt sein. Dadurch kann leichter auf den Hänger zugegriffen werden, um ihn von seiner ersten Position in seine zweite Position zu überführen.

Das erfindungsgemäße Behältnis ist in einer weiteren Variante dadurch gekennzeichnet, dass ein erster und ein zweiter Aufnahmebereich für das Aufhängelement in dem Boden des Behältnisses ausgebildet sind. Vorzugsweise ist das Aufhängelement von dem ersten in den zweiten Aufnahmebereich und wieder zurück bewegbar. Dadurch kann zum Beispiel eine einseitige Abnutzung des Scharniers reduziert oder vermieden werden. In einer Ausgestaltung sind der erste und der zweite Aufnahmebereich gegenüberliegend angeordnet und/oder im Wesentlichen gleich ausgeführt.

Eine weitere Ausführungsform des Behältnisses ist dadurch gekennzeichnet, dass in einem äußeren Bereich des Bodens ein Fußbereich zum Aufstellen der Flasche ausgebildet ist und/oder dass in dem Boden, vorzugsweise ausgehend von dem Fußbereich, eine Mulde ausgebildet ist, durch welche sich der Aufnahmebereich für den Hänger erstreckt. Die Mulde unterstützt insbesondere ein ergonomisches Greifen und Halten des Hängers mit den Fingern.

In einer Variante weist das Aufhängelement in einem Bereich seines zweiten Endes einen Durchbruch, beispielsweise in Form eines runden Lochs oder eines Langlochs, zur Aufnahme einer Aufhängvorrichtung auf. Die Aufhängvorrichtung kann dann, wenn das Behältnis in seinem Verwendungszustand verwendet werden soll, also in einem bestimmungsgemäßen Betrieb des Behältnisses, durch den Durchbruch hindurchgreifen. Damit ist eine universelle Verwendung des Behältnisses mit zahlreichen unterschiedlichen Aufhängvorrichtungen möglich.

Um eine besonders einfache Herstellung des Behältnisses zu erreichen, besteht es in einer Variante aus genau einem einzigen Material. Geeignete Materialien sind beispielsweise Polypropylen (PP) oder Polyethylen (PE), wie etwa ein Polyethylen hoher Dichte (HDPE). Andere Kunststoffmaterialien, wie etwa Copolymere, die Monomereinheiten aus Propylen, Ethylen, Butylen, Butadien, Styren und/oder Isopren aufweisen, können ebenfalls verwendet werden.

Während aus dem Stand der Technik bekannte Behältnisse regelmäßig einen mehrschichtigen Aufbau aufweisen, ist das vorliegend beanspruchte Behältnis in einer Variante aus einer einzigen Materialschicht aufgebaut. Dies erleichtert ebenfalls die Herstellung und die anschließende Wiederverwendung des Behältnisses. Es kann aber auch mehrschichtig aufgebaut sein.

Das Behältnis kann zum Beispiel aus einem halbtransparenten oder einem transluzenten Material aufgebaut sein. Auf diese Weise ist es möglich, den Füllstand einer in dem Behältnis aufgenommenen enteralen Nährstofflösung leicht von außen zu erkennen. Das Behältnis kann auch abschnittsweise durch ein aufgebrachtes Etikett, einen aufgebrachten Druck und/oder eine aufgebrachte Beschichtung intransparent sein.

Vorzugsweise ist der Querschnitt des Behältnisses im Bereich des Bodens gegenüber dem mittleren Bereich des Behältnisses vergrößert. Dadurch kann zum einen die Standfestigkeit verbessert werden, wenn das Behältnis beispielsweise auf einem Tisch abgestellt werden soll. Zum anderen kann dadurch das Behältnis sicher gegriffen werden, wenn es über seinen Hänger kopfüber aufgehängt werden soll.

In einer weiteren Variante weist das Behältnis zumindest in einem Abschnitt, der in Längserstreckungsrichtung des Behältnisses in etwa in der Mitte des Behältnisses liegt, einen Querschnitt auf, der aneinander angrenzende konvex gekrümmte und gerade Abschnitte in alternierender Anordnung aufweist. Dabei liegen sich in einer Variante gerade Abschnitte und konvex gekrümmte Abschnitt jeweils genau gegenüber. Auf diese Weise lässt sich das Behältnis besonders einfach und sicher greifen. Zudem ist es durch die Anordnung solcher gerader Abschnitte nicht nur in stehender Position lagerbar, sondern auch in liegender Position, nämlich unter Verwendung eines geraden Abschnitts als Stand- oder Liegefläche. Auch für den Fall, dass das Behältnis in liegender Position gelagert wird, ist es äußerst vorteilhaft, wenn das Aufhängelement sicher in seiner ersten Position fixiert ist. Denn dann weist das Behältnis keine unnötig nach außen stehenden Elemente auf, die den Platzbedarf bei einer liegenden Lagerung erhöhen würden.

An den Übergängen zwischen den konvex gekrümmten und den geraden Abschnitten der Seitenwandungen des Behältnisses ergeben sich Kanten (bzw. Ecken im Querschnitt), sodass der zuvor diskutierte Querschnitt auch als im Wesentlicher polygonaler Querschnitt bezeichnet werden kann.

In einer Variante weisen die geraden Abschnitte eine Breite auf, die in einem Abschnitt des Behältnisses, der näher an der Öffnung liegt als der mittige Abschnitt, größer ist als im mittigen bzw. mittleren Abschnitt des Behältnisses. Auf diese Weise wird eine noch leichtere Greifbarkeit des Behältnisses erreicht. Denn dann wird ein Verwender des Behältnisses intuitiv dazu animiert, das Behältnis in eben jenen breiter ausgestalteten geraden Abschnitt zu greifen. Da diese oberhalb des mittigen Abschnittes des Behältnisses liegen, erfolgt ein Greifen in einem solchen Fall in einen Bereich, der deutlich oberhalb des Schwerpunktes des Behältnisses liegt. Folglich erfolgt eine Selbststabilisierung des Behältnisses, wodurch ein sicherer händischer Transport und ein sicheres Hantieren des Behältnisses gewährleistet werden.

In einer weiteren Variante kann das Behältnis zumindest in einem Abschnitt, der näher dem Boden zugewandt ist als der mittige Abschnitt des Behältnisses, einen Querschnitt aufweisen, der konvex gekrümmte und mindestens einen konkav gekrümmten Abschnitt in alternierender Anordnung aufweist. Dabei sind die konvex gekrümmten Abschnitte und der konkav gekrümmte Abschnitt bzw. die konkav gekrümmten Abschnitte vorzugsweise unmittelbar aufeinander folgend angeordnet. Beispielsweise können die oben erläuterten geraden Abschnitte in diesem Bereich des Behältnisses durch konkav gekrümmte Abschnitte ersetzt sein. Dadurch ergibt sich ein Querschnitt des Behältnisses, der einer stilisierten Blüte entspricht. Die Vorteile einer derartigen Ausgestaltung kommen insbesondere dann zum Tragen, wenn sich das Aufhängelement in seiner ersten Position zwischen zwei einander gegenüberliegenden konkav gekrümmten Abschnitten erstreckt oder zwischen einem konkav gekrümmten Abschnitt, der einem geraden Abschnitt gegenüber liegt, erstreckt, wie dies in einer Variante vorgesehen ist. Denn dann ermöglichen die konkav gekrümmten Abschnitte einen besonders einfachen Zugriff auf das Aufhängelement, sodass es einfach aus seiner ersten Position in seine zweite Position und bei Bedarf von seiner zweiten Position in seine erste Position überführt werden kann.

In einer Variante kann lediglich ein einziger konkav gekrümmter Abschnitt vorgesehen sein, der zwischen zwei konvex gekrümmten Abschnitten angeordnet ist. Diesen konkav gekrümmten Abschnitt gegenüber kann beispielsweise ein im Querschnitt gerader Abschnitt angeordnet sein. In dieser Variante ist es insbesondere vorgesehen, dass das zweite Ende des Aufhängelementes in der ersten Position des Aufhängelementes dem konkav gekrümmten Abschnitt zugewandt ist, während die Scharniereinrichtung am ersten Ende des Aufhängelementes an einem geraden Abschnitt bzw. an einem konvex gekrümmten Abschnitt des Querschnitts des Behältnisses angeordnet ist. Auch in dieser Variante ergibt sich nach wie vor eine gute Zugänglichkeit des zweiten Endes des Aufhängelementes, sodass es einfach aus der ersten in die zweite und aus der zweiten in die erste Position überführt werden kann.

In einer Variante sind das Behältnis, das Aufhängelement, die Scharniereinrichtung und insbesondere der Sockel einstückig ausgebildet. Dies erleichtert die Herstellung des Behältnisses und gewährleistet eine einfache, aber dennoch sichere Handhabung des Behältnisses bzw. des Aufhängelementes.

In einer weiteren Variante sind die Seitenwandungen des Behältnisses frei von horizontal und/oder vertikal verlaufenden Rippen ausgestaltet. Derartige Rippen können in Behältnissen für enterale Nährlösungen eingesetzt werden, um für eine bessere Wärmeübertragung zu sorgen, wenn z.B. die Nährlösung auf eine bestimmte Temperatur gebracht werden soll. Allerdings erfordern derartige Rippen einen erhöhten Materialeinsatz und zudem eine aufwendigere Herstellungsweise des Behältnisses. Darüber hinaus verbleiben in derartigen Rippen häufig Reste der in dem Behältnis aufgenommenen Nährstofflösung, sodass eine einfache Restentleerung des Behältnisses durch solche Rippen erschwert wird. Es ist daher aus Kosten- und Effizienzgründen vorteilhaft, auf derartige Rippen zu verzichten.

Erfindungsgemäß ist im Boden ein Aufnahmebereich für das Aufhängelement ausgebildet, in dem das Aufhängelement in seiner ersten Position aufgenommen werden kann. Die Aufnahme des Aufhängelements erfolgt dabei derart, dass das Aufhängelement nicht über andere Bereiche des Bodens hinaussteht. Beispielsweise kann es gegenüber anderen Bereichen des Bodens bündig angeordnet sein. Insbesondere beträgt eine Höhendifferenz zwischen dem Aufnahmebereich an der Außenseite des Behältnisses und den übrigen Bereichen des Bodens in Längserstreckungsrichtung des Behältnisses maximal 15 mm. Die Höhendifferenz in Längserstreckungsrichtung des Behältnisses zwischen dem Aufnahmebereich und den übrigen Bereichen des Bodens kann beispielsweise in einem Bereich von 0,5 bis 15 mm liegen.

In einer Variante weist das Behältnis ein Volumen auf, das größer als 150 ml, insbesondere größer als 300 ml, insbesondere größer als 400 ml, insbesondere größer als 500 ml, insbesondere größer als 600 ml und ganz besonders größer als 750 ml ist. Ein geeignetes Volumen liegt beispielsweise im Bereich von 300 ml bis 500 ml, wobei andere Bereiche, die aus dem vorstehend genannten Obergrenzen gebildet werden, ebenfalls denkbar und vorgesehen sind.

Das Behältnis lässt sich beispielsweise mittels Extrusionsblasformen herstellen. In einer alternativen Variante ist eine Herstellung mittels Streckblasformen vorgesehen.

In einer weiteren Variante weist das Behältnis um die Öffnung herum eine Verbindungseinrichtung, vorzugsweise ein Gewinde, zur Aufnahme eines Deckels auf. Der Deckel kann beispielsweise einen Anschluss aufweisen, mit dem das Behältnis mit einem Überleitsystem verbunden werden kann, durch das hindurch eine in dem Behältnis aufgenommene enterale Nährstofflösung zu einem Patienten transportiert werden kann.

Die im Zusammenhang mit dem erläuterten Behältnis dargestellten Varianten sind in beliebiger Kombination in analoger Weise auf die separat beschriebene Kombination übertragbar.

Ein Behältnis gemäß den vorstehenden Erläuterungen eignet sich insbesondere dazu, in Kombination mit einem Deckel mit den nachfolgend diskutierten Merkmalen eingesetzt zu werden.

Ein derartiger Deckel weist eine Verbindungseinrichtung, vorzugsweise ein Gewinde, auf, das mit einem Verbindungspartner, vorzugsweise einem Gegengewinde, an einem Behältnis zur Aufnahme einer enteralen Nährstofflösung in Eingriff gebracht werden kann. Dadurch kann eine Öffnung in dem Behältnis überdeckt werden. Ferner weist der Deckel einen Anschlussstutzen zum Anschluss einer Schlauchleitung auf. Dieser Anschlussstutzen kann beispielsweise als herkömmlicher Port für das Einführen eines Spikes ausgestaltet sein.

Vorzugsweise ist auf der Innenseite des Deckels eine Öffnungseinrichtung vorgesehen. Diese Öffnungseinrichtung besteht aus zwei Teilen oder umfasst zwei Teile. Ein erster Teil ist, vorzugsweise formschlüssig und/oder kraftschlüssig, mit dem Deckel verbunden. Der erste Teil kann beispielsweise in den Deckel eingeklipst oder eingerastet sein. Der erste Teil ist, vorzugsweise dauerhaft, mit einem zweiten Teil der Öffnungseinrichtung verbunden. Der zweite Teil der Öffnungseinrichtung umfasst insbesondere eine Klinge. Die Öffnungseinrichtung kann nun entweder in einem Ausgangszustand oder in einem Öffnungszustand vorliegen. Im Ausgangszustand ist der zweite Teil der Öffnungseinrichtung mit wenigstens einem Fixierelement an dem ersten Teil der Öffnungsvorrichtung fixiert. Dadurch kann sich der zweite Teil der Öffnungseinrichtung nicht vom ersten Teil der Öffnungseinrichtung wegbewegen. Vielmehr werden beide Teile durch das Fixierelement aneinander gehalten. Im Öffnungszustand der Öffnungseinrichtung verhindert das Fixierelement nicht mehr eine Bewegung des zweiten Teils in Relation zum ersten Teil der Öffnungseinrichtung. Vielmehr kann sich der zweite Teil der Öffnungseinrichtung im Öffnungszustand der Öffnungseinrichtung relativ zum ersten Teil der Öffnungseinrichtung bewegen. Der zweite Teil kann im Öffnungszustand dauerhaft beweglich sein. Der zweite Teil kann im Öffnungszustand auch derart beweglich sein, dass er von dem Ausgangszustand in den Öffnungszustand nur einmalig bewegbar ist und gegebenenfalls dann arretiert wird, beispielsweise einrastend. Vorzugsweise ist oder bleibt der zweite Teil dauerhaft mit dem ersten Teil verbunden.

Während die dauerhafte Verbindung zwischen dem ersten Teil der Öffnungseinrichtung und dem zweiten Teil der Öffnungseinrichtung im Ausgangszustand der Öffnungseinrichtung keine oder keine wesentliche Relativbewegung der beiden Teile zueinander gestattet, kann dies im Öffnungszustand der Öffnungseinrichtung also möglich sein. Durch diese Öffnungseinrichtung ist es möglich, eine Abdeckung, die die Öffnung in dem Behältnis standardmäßig überdeckt, zu öffnen. Das heißt, wenn ein Spike oder ein anderer Gegenstand durch den Anschlussstutzen in den Deckel eingeführt wird, sorgt nicht der Spike selbst für ein Öffnen der Abdeckung des Behältnisses. Vielmehr überführt der Spike die Öffnungseinrichtung vom Ausgangszustand in den Öffnungszustand, so dass der zweite Teil der Öffnungseinrichtung dann für eine Öffnung der Abdeckung des Behältnisses sorgt. Die Öffnung bzw. das Loch in der Abdeckung des Behältnisses wird durch die Klinge des zweiten Teils erzeugt, hier mittels Schneiden. Die Klinge ermöglicht durch das Schneiden ein besser definiertes Öffnen der Abdeckung gegenüber einem Öffnen, welches im Wesentlichen über Aufreißen erfolgt.

Bei dieser Abdeckung kann es sich insbesondere um eine Folie, wie etwa eine Aluminiumfolie, handeln. Ebenso sind Verbundmaterialien für die Abdeckung möglich. Derartige Abdeckungen sind an sich bekannt. Der vorliegende Deckel eignet sich für alle Behältnisse, die mit derartigen Abdeckungen verschlossen sind. Wenn die Abdeckung durch die Öffnungseinrichtung geöffnet wurde, sorgt der Deckel weiterhin für eine Überdeckung der Öffnung in dem Behältnis. Eine Flüssigkeit, wie etwa eine enterale Nährstofflösung, die in dem Behältnis enthalten ist, kann dann nur durch eine Öffnung in dem Deckel aus dem Behältnis ausströmen. Diese Öffnung im Deckel wird vorzugsweise durch den Anschlussstutzen zum Anschluss einer Schlauchleitung bereitgestellt.

Das heißt, wenn eine Schlauchleitung, die einen Spike oder ein anderes Endstück trägt, durch den Anschlussstutzen in das Innere des Deckels geführt wird, sorgt sie zunächst zur Überführung der Öffnungseinrichtung vom Ausgangszustand in den Öffnungszustand und anschließend für ein Abführen von Flüssigkeit, die in dem Behältnis enthalten ist.

Für einen Benutzer hat der Deckel den großen Vorteil, dass sich seine Handhabung nicht von aus dem Stand der Technik bekannten Deckeln unterscheidet. Insbesondere sind neben dem Deckel und einer mit einem Endstück versehenen Schlauchleitung keine weiteren Elemente erforderlich, um den Deckel im bestimmungsgemäßen Betrieb einzusetzen. Dennoch erleichtert der Deckel aufgrund der in seinem Inneren vorhandenen Öffnungseinrichtung das Öffnen einer Abdeckung eines Behältnisses. Zudem sorgt die Klinge der Öffnungseinrichtung für ein sauberes Öffnen der Abdeckung, so dass das mit einem derartigen Deckel geöffnete Behältnis ein besseres Auslauf- bzw. Ausgießverhalten aufweist als ein Behältnis, das in klassischer Weise durch das Einstechen eines Spikes oder eines anderen Endstücks einer Schlauchleitung in die Abdeckung des Behältnisses geöffnet wurde.

Der zweite Teil umfasst eine klingenförmige Gestalt. Dabei ist eine Schneide der Klinge oder allgemein des zweiten Teils der Öffnungseinrichtung vorzugsweise an derjenigen Seite des zweiten Teils der Öffnungseinrichtung ausgebildet, die vom ersten Teil der Öffnungseinrichtung weg weist. Wenn sich der zweite Teil der Öffnungseinrichtung dann im Öffnungszustand der Öffnungseinrichtung vom ersten Teil wegbewegt (beispielsweise wegklappt), kann die unterhalb des zweiten Teils der Öffnungseinrichtung angeordnete Abdeckung eines Behältnisses in besonders einfacher Art und Weise von der schneidmesserartigen Kontur beziehungsweise klingenförmigen Kontur kontaktiert und in der Folge aufgeschnitten werden. In einer Ausführungsform ist der zweite Teil der Öffnungseinrichtung an einer Unterseite der Klinge abschnittsweise oder vollständig schneidmesserartig ausgestaltet.

Mit anderen Worten ausgedrückt, dient der zweite Teil der Öffnungseinrichtung dem Aufschneiden einer Abdeckung eines Behältnisses, auf das der Deckel aufgesetzt wird. Wie bereits oben ausgeführt, kann die Abdeckung des Behältnisses insbesondere aus einer Aluminiumfolie oder einem Verbundmaterial, welches vorzugsweise Aluminium enthält, bestehen. Der zweite Teil der Öffnungseinrichtung dringt in dieser Variante dann mit seiner Klinge wie ein Messer in die Abdeckung ein und sorgt für ein sauberes Aufschneiden der Abdeckung, wodurch das Ausguss- beziehungsweise Auslaufverhalten einer Flüssigkeit aus dem Behältnis gegenüber den aus dem Stand der Technik bekannten Lösungen positiv beeinflusst wird.

Das Fixierelement kann in einer ersten Variante zusätzlich die Funktion Scharnierelements übernehmen. In einer anderen Variante sind der erste Teil der Öffnungseinrichtung und der zweite Teil der Öffnungseinrichtung nicht nur über das Fixierelement, sondern auch zusätzlich über ein Scharnierelement miteinander verbunden. Das Scharnierelement ist dabei als ein von dem Fixierelement getrennt ausgeführtes Bauteil ausgestaltet. Mit einer derartigen Anordnung ist es auf besonders einfache Art und Weise möglich, dass der zweite Teil der Öffnungseinrichtung mit dem ersten Teil der Öffnungseinrichtung verbunden ist oder bleibt, auch wenn sich die Öffnungseinrichtung nicht mehr in ihrem Ausgangszustand befindet. Das Scharnierelement kann beispielsweise als ein stegartiges Verbindungselement ausgeführt sein, das eine gewisse Flexibilität aufweist und eine Relativverbindung des zweiten Teils der Öffnungseinrichtung gegenüber dem ersten Teil der Öffnungseinrichtung zulässt. Zur einfachen Herstellung kann die Öffnungseinrichtung beispielsweise als einstückiges Spritzgussteil angefertigt werden.

In einer weiteren Variante greift das Scharnierelement an einem ersten Endbereich des zweiten Teils der Öffnungseinrichtung an. An diesem ersten Endbereich ist dann eine Scharnierachse definiert, um die herum der zweite Teil der Öffnungseinrichtung gegenüber dem ersten Teil der Öffnungseinrichtung bewegt bzw. geklappt werden kann.

In einer weiteren Ausführungsform der Öffnungseinrichtung umfasst die Klinge eine Klingenspitze, welche in einem zweiten Endbereich des zweiten Teils der Öffnungseinrichtung ausgebildet ist, welcher dem ersten Endbereich in Längserstreckungsrichtung der Öffnungseinrichtung gegenüberliegt. In dieser Ausgestaltung wird die Abdeckung des Behältnisses zunächst durch die Klingenspitze punktiert und dann durch die Klinge, insbesondere durch die Schneide der Klinge, aufgeschnitten. Durch die Klingenspitze kann die Klinge oder die Schneide der Klinge zum Aufschneiden besser an der Abdeckung ansetzen, da die Klinge in die Punktionsöffnung eingreifen kann. Damit wird das Aufschneiden erleichtert.

Zum Bereitstellen der Klingenspitze verlaufen in einer weiteren Variante eine Unterseite der Klinge und eine Seitenfläche der Klinge in einem spitzen Winkel zueinander. Die Seitenfläche der Klinge ist dabei in einem zweiten Endbereich des zweiten Teils der Öffnungseinrichtung ausgebildet. Der zweite Endbereich liegt dem ersten Endbereich in Längserstreckungsrichtung der Öffnungseinrichtung gegenüber. Das heißt, wenn der zweite Teil der Öffnungseinrichtung um die Scharnierachse herum bewegt wird, legt der erste Endbereich die größte Strecke auf einem Kreisbogen des gesamten zweiten Teils der Öffnungseinrichtung zurück. Der spitze Winkel zwischen der Unterseite der Klinge und der Seitenfläche der Klinge sorgt nun dafür, dass der zweite Teil der Öffnungseinrichtung besonders gut eine Abdeckung punktieren, d.h. initial öffnen kann. Das heißt, der spitze Winkel sorgt für eine ausreichende Schärfe der Klinge zum Anschneiden der Abdeckung.

Der zweite Teil der Öffnungseinrichtung weist in einer weiteren Ausführungsform wenigstens einen Flügel auf, welcher seitlich an der Klinge angeordnet ist. Vorzugsweise ist der wenigstens eine Flügel an einer Oberseite der Klinge angeordnet. Dieser übernimmt die Funktion eines Verdrängers für die Abdeckung zum Vergrößern der in der Abdeckung mittels der Klinge erzeugten Öffnung. Die Abdeckung wird zunächst durch die Klingenspitze punktiert und dann durch die Schneide der Klinge weiter aufgeschnitten. Der oder die Flügel schieben die ausgeschnittene Abdeckung zur Seite. Dadurch wird die durch die Klinge erzeugte Schlitzöffnung zur Seite hin vergrößert, womit der Durchfluss erhöht wird. In einer bevorzugten Ausgestaltung besitzt der zweite Teil der Öffnungseinrichtung zwei Flügel.

Der wenigstens eine Flügel ist insbesondere von der Klingenspitze weg in Richtung des ersten Endbereichs des zweiten Teils der Öffnungseinrichtung versetzt an der Klinge positioniert. Dies unterstützt insbesondere das Zusammenwirken von Klinge und Flügel, indem die Abdeckung zunächst durch die Klinge geöffnet wird und die erzeugte Schlitzöffnung dann durch den oder die Flügel vergrößert wird. In einer Ausgestaltung des wenigstens einen Flügels besitzt dieser in Richtung des ersten Endbereichs des zweiten Teils der Öffnungseinrichtung eine zunehmende Breite. Dadurch kann die durch die Klinge erzeugte Schlitzöffnung nach und nach weiter verbreitert und somit vergrößert werden.

In einer weiteren Variante weist der erste Teil der Öffnungseinrichtung eine Durchgangsöffnung in einem zentralen Bereich des ersten Teils auf. Durch diese Durchgangsöffnung hindurch kann ein Ansatzstück einer Schlauchleitung geführt werden, um das zweite Teil der Öffnungseinrichtung zu kontaktieren. Dieses Ansatzstück der Schlauchleitung kann auch als Endstück bezeichnet werden und beispielsweise ein Spike sein. Mit dieser Variante ist es besonders einfach, eine durch den Anschlussstutzen des Deckels hindurchgeführte Schlauchleitung auch durch den ersten Teil der Öffnungseinrichtung hindurchzuführen, damit das Endstück beziehungsweise das Ansatzstück der Schlauchleitung den zweiten Teil der Öffnungseinrichtung kontaktieren kann. Wenn dann ein entsprechender Druck auf das zweite Teil der Öffnungseinrichtung ausgeübt wird, wird die Öffnungseinrichtung vom Ausgangszustand in den Öffnungszustand überführt.

In einer Ausführungsform des Deckels ist eine Haltekraft des ersten Teils der Öffnungseinrichtung in dem Deckel größer als eine Kraft, die von dem Fixierelement aufgebracht wird, um das zweite Teil der Öffnungseinrichtung an dem ersten Teil der Öffnungseinrichtung zu fixieren. Mit einer derartigen Ausgestaltung ist sichergestellt, dass ein Ansatzstück einer Schlauchleitung beim Überführen der Öffnungseinrichtung vom Ausgangszustand in den Öffnungszustand tatsächlich nur eine Relativbewegung des zweiten Teils der Öffnungseinrichtung zum ersten Teil der Öffnungseinrichtung bewirkt, nicht jedoch ein Lösen der Öffnungseinrichtung von dem Deckel. Wie bereits erwähnt, kann der erste Teil der Öffnungseinrichtung beispielsweise in einem hierfür vorgesehenen Bereich des Deckels eingeklipst sein. Der erste Teil kann aber auch beispielsweise mittels eines Schnapprings montiert werden.

Das wenigstens eine Fixierelement besitzt in einer Ausgestaltung einen ausgehend von dem ersten Teil in Richtung zu dem zweiten Teil der Öffnungseinrichtung verjüngenden Querschnitt. Dadurch kann zum einen eine ausreichende mechanisch stabile Verbindung zwischen dem ersten Teil und dem zweiten Teil der Öffnungseinrichtung bereitgestellt werden. Zum anderen kann dadurch auch das gezielte Lösen des zweiten Teils von dem ersten Teil, insbesondere beim Einführen des Ansatzstücks einer Schlauchleitung, unterstützt werden. In einer bevorzugten Ausgestaltung sind zwei Fixierelemente vorgesehen.

In einer Ausgestaltung des Anschlussstutzens weist dieser eine Selektionseinrichtung auf. Vorzugsweise weist der Anschlussstutzen abschnittsweise eine kreuzförmig ausgestaltete Geometrie, vorzugsweise eine kreuzförmig ausgestaltete Öffnung, auf. Mit einer derartigen Geometrie kann sichergestellt werden, dass nur ein an diese Geometrie angepasstes Ansatzstück einer Schlauchleitung in den Anschlussstutzen eingeführt werden kann. Auf diese Weise kann der Deckel spezifisch für den Einsatz an Behältnisse für enterale Nährstofflösungen angepasst werden. Denn dann lassen sich durch einen derartigen Anschlussstutzen keine Kanülen oder Spikes durchführen, die für eine intravenöse Applikation eines Medikamentes oder einer anderen Lösung vorgesehen sind. Folglich lässt sich auf diese Weise eine Verwechslung unterschiedlicher Behältnisse für unterschiedliche Einsatzzwecke vermeiden. Die Selektionseinrichtung ist insbesondere in einem oberen Bereich des Anschlussstutzens angeordnet. Vorzugsweise wird eine Oberseite des Anschlussstutzens durch die Selektionseinrichtung bereitgestellt.

In einer weiteren Variante ist zwischen dem Anschlussstutzen und der Öffnungseinrichtung eine Dichtung angeordnet, durch die hindurch ein Ansatzstück einer Schlauchleitung hindurchgeführt werden kann. Vorzugsweise wird die Dichtung mit einem Schlitz bereitgestellt, der an die Geometrie der Selektionseinrichtung angepasst ist. Damit kann gegebenenfalls unterstützt werden, dass nur ein Ansatzstück einer Schlauchleitung mit einer definierten Geometrie angeschlossen werden kann. Eine derartige Dichtung kann beispielsweise dann eingesetzt werden, wenn bereits der Anschlussstutzen eine spezifisch ausgestaltete Geometrie (wie etwa eine kreuzförmig ausgestaltete Geometrie) aufweist. Dann unterstützt die Dichtung die Funktion des Anschlussstutzens dahingehend, dass im Wesentlichen nur ein Anschlussstück einer Schlauchleitung mit einer spezifischen Geometrie durch den Anschlussstutzen hindurchgeführt werden kann. Andererseits ist es auch denkbar, eine solche Dichtung genau dann einzusetzen, wenn der Anschlussstutzen eine beliebig ausgestaltete Geometrie aufweist. Denn dann kann eine derartige Dichtung dafür sorgen, dass nur ein Anschlussstutzen spezifischer Geometrie durch sie hindurchgeführt werden kann und die Öffnungseinrichtung vom Ausgangszustand in den Öffnungszustand überführen kann. Folglich kann auch mit einer derartigen Dichtung - ähnlich wie mit einer spezifischen Innengeometrie des Anschlussstutzens - verhindert werden, dass ein "falscher" Anschlussstutzens zum Öffnen des Behältnisses, auf das der Deckel aufgesetzt ist, verwendet werden kann.

In einer weiteren Variante weist der Deckel eine Kappe zum Verschließen des Anschlussstutzens auf. Dadurch kann einer Verschmutzung des Anschlussstutzens vor einer Benutzung des Deckels effektiv entgegengewirkt werden.

Die Kappe zum Verschließen des Anschlussstutzens kann beispielsweise in reversibler Art und Weise mit dem Deckel verbindbar sein. Beispielsweise kann die Kappe mit einem Schraubgewinde mit dem Deckel verbunden sein. Sie kann dann auf den Deckel aufgeschraubt werden oder von dem Deckel abgeschraubt werden. In einer Variante ist es vorgesehen, dass die Kappe dafür vorgesehen und eingerichtet ist, durch ein Herausbrechen aus dem Anschlussstutzen von dem Anschlussstutzen entfernt zu werden. Diese Variante weist den Vorteil auf, dass es für einen Benutzer unmittelbar ersichtlich ist, welcher Deckel bereits einmal im Einsatz war und welcher Deckel sich in einem fabrikationsneuen Zustand befindet. Es wird dadurch ein Originalitätsverschluss bereitgestellt. Auf diese Weise lassen sich Kontaminationen einer enteralen Nährlösung oder einer anderen Flüssigkeit, die sich in dem Behältnis, welches von dem Deckel überdeckt wird, befindet, vermeiden.

In einer weiteren Variante ist der zweite Teil der Öffnungseinrichtung im Ausgangszustand im Wesentlichen parallel zum ersten Teil der Öffnungseinrichtung angeordnet, während er im Öffnungszustand quer zum ersten Teil der Öffnungseinrichtung angeordnet ist oder sein kann. Das heißt, die Relativbewegung zwischen dem ersten Teil der Öffnungseinrichtung und dem zweiten Teil der Öffnungseinrichtung ist in dieser Variante als eine Klappbewegung des zweiten Teils im Verhältnis zum ersten Teil ausgestaltet. Dadurch kann ein besonders kontrolliertes und reproduzierbares Eindringen des zweiten Teils der Öffnungseinrichtung in eine Abdeckung, die unterhalb des Deckels angeordnet ist, gewährleistet werden. Eine derartige reproduzierbare Öffnung einer solchen Abdeckung ist mit den aus dem Stand der Technik bekannten Lösungen nicht möglich, da das Aufreißverhalten einer Abdeckung maßgeblich von dem Druck, mit dem z.B. ein Spike oder ein anderes Anschlussteil einer Schlauchleitung durch eine solche Abdeckung hindurch gestochen wird, abhängt. Durch den Deckel mit der eingesetzten Öffnungseinrichtung wird diese Abhängigkeit zumindest reduziert oder sogar weitgehend aufgelöst. Denn die Öffnungseinrichtung sorgt weitgehend unabhängig von dem Druck, mit dem ein Anschlussstück eines Schlauches auf sie einwirkt, für ein stets im Wesentlichen gleiches Öffnungsverhalten einer darunterliegenden Abdeckung.

In einer weiteren Variante weist der Deckel wenigstens eine mit einem Filter verschlossene Lüftung auf. Der Filter ist für Gase durchlässig. Für Flüssigkeiten ist er jedoch undurchlässig. Auf diese Weise kann eine Belüftung des Behältnisses erfolgen, auf das der Deckel aufgesetzt ist, wenn eine Abdeckung des Behältnisses bereits geöffnet ist und eine Strömungsverbindung zwischen den Innenraum des Behältnisses und dem Deckel hergestellt ist. Wenn dann eine in dem Behältnis vorrätig gehaltene Flüssigkeit durch eine Schlauchleitung durch den Anschlussstutzen aus dem Deckel und damit aus dem Behältnis austritt, kann ein entsprechendes Volumen an Gas durch den Filter in das Behältnis einströmen. Auf diese Weise kommt es zum Druckausgleich zwischen dem Innenraum des Behältnisses und einer das Behältnis umgebenden Atmosphäre.

Der erste Teil der Öffnungseinrichtung und der zweite Teil der Öffnungseinrichtung bestehen vorzugsweise aus einem Material, das bei den im bestimmungsgemäßen Gebrauch des Deckels vorherrschenden Kräften resistent gegen eine Verformung ist. Auf diese Weise kann stets ein sicheres Aufschneiden einer Abdeckung durch den zweiten Teil der Öffnungseinrichtung gewährleistet werden. Geeignete Materialien sind beispielsweise Kunststoffe wie etwa Polypropylen, Polyethylen oder Polycarbonat. Die Wandstärke der einzelnen Teile der Öffnungseinrichtung sollte dabei vorzugsweise größer sein als eine Dicke beziehungsweise Wandstärke einer Abdeckung, die durch die Öffnungseinrichtung aufgeschnitten werden soll.

Die Öffnungseinrichtung für einen Deckel gemäß den vorherigen Erläuterungen kann auch als solches vorliegen. Die Öffnungseinrichtung liegt vor mit einem ersten Teil, der formschlüssig und/oder kraftschlüssig und/oder stoffschlüssig mit einem solchen Deckel verbunden oder verbindbar ist, und einem mit dem ersten Teil, vorzugsweise dauerhaft, verbundenen zweiten Teil, welcher eine Klinge umfasst. Dabei ist der zweite Teil der Öffnungseinrichtung in einem Ausgangszustand der Öffnungseinrichtung mit wenigstens einem Fixierelement an dem ersten Teil der Öffnungseinrichtung fixiert. In einem Öffnungszustand der Öffnungseinrichtung ist der zweite Teil der Öffnungseinrichtung relativ zum ersten Teil der Öffnungseinrichtung beweglich.

Diese Öffnungseinrichtung kann in verschiedene Deckel eingesetzt werden. Die genaue Ausgestaltung der Deckel ist dabei weniger erheblich. Relevant ist lediglich, dass eine Aufnahme für die Öffnungseinrichtung vorgesehen ist.

Die im Zusammenhang mit dem erläuterten Deckel dargestellten Varianten sind in beliebiger Kombination in analoger Weise auf die separat beschriebene Öffnungseinrichtung übertragbar.

Wie bereits erwähnt, eignet sich der oben beschriebene Deckel insbesondere zum Aufsetzen auf ein Behältnis zur Aufnahme einer enteralen Nährstofflösung. Die Erfindung betrifft daher auch eine Kombination aus einem Deckel entsprechend den vorhergehenden Erläuterungen und einem Behältnis zur Aufnahme einer enteralen Nährstofflösung, insbesondere entsprechend den vorhergehenden Erläuterungen. Das Behältnis weist dabei eine Öffnung auf, über die eine enterale Nährstofflösung in das Behältnis hinein oder aus dem Behältnis herausgebracht werden kann. Um die Öffnung herum ist eine Verbindungseinrichtung, beispielsweise ein Gewinde, zur Aufnahme des Deckels angeordnet. Die Verbindungseinrichtung, beispielsweise das Gewinde, des Deckels und der Verbindungspartner, beispielsweise das Gewinde, des Behältnisses stehen dabei derart miteinander in Eingriff, dass der Deckel die Öffnung überdeckt und flüssigkeitsdicht verschließt. Bei Bedarf kann im Deckel oder an dem Behältnis eine Dichtung vorgesehen sein. Die Öffnung ist dabei insbesondere mit einer Abdeckung versehen, die erst geöffnet werden muss, damit eine in dem Behältnis enthaltene enterale Nährstofflösung aus dem Behältnis in den Deckel bzw. durch diesen hindurch in ein Schlauchsystem überführt werden kann.

Weitere Details und Einzelheiten der vorliegenden Erfindung sollen anhand eines Ausführungsbeispiels und entsprechender Figuren erläutert werden. Es zeigen:
- Figur 1: eine perspektivische Ansicht auf ein Ausführungsbeispiel eines Behältnisses zur Aufnahme einer enteralen Nährstofflösung;
- Figur 2A: eine seitliche Ansicht des Ausführungsbeispiels der Figur 1;
- Figur 2B: eine Querschnittsansicht des Ausführungsbeispiels der Figuren 1 und 2A entlang der in der Figur 2A gekennzeichneten Stelle (A-A);
- Figur 2C: eine vergrößerte Darstellung des Bodenbereichs und des Hängers aus Figur 2A;
- Figur 2D: eine perspektivische Ansicht auf die Unterseite des Behältnisses aus Figur 2A mit dem im Bodenbereich ausgebildeten Hänger;
- Figur 2E: eine vergrößerte Darstellung des Bodenbereichs und des Hängers aus Figur 2D;
- Figur 3: eine weitere seitliche Ansicht des Ausführungsbeispiels der Figuren 1 bis 2E im Lagerzustand und
- Figur 4: eine seitliche Ansicht des Ausführungsbeispiels der Figuren 1 bis 3 im Verwendungszustand.

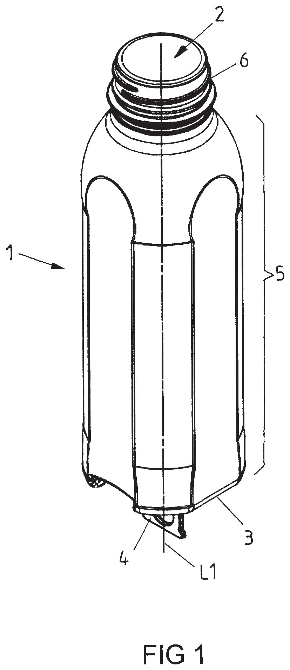

Die Figur 1 zeigt eine perspektivische Ansicht auf eine Flasche 1 als Behältnis zur Aufnahme einer enteralen Nährstofflösung. Diese Flasche 1 erstreckt sich entlang einer ersten Längserstreckungsrichtung L1 und weist an ihrem oberen Ende eine Öffnung 2 und an ihrem unteren Ende einen Boden 3 auf. An den Boden 3 ist ein Aufhängelement 4 angeformt, das nachfolgend auch kurz als Hänger 4 bezeichnet wird.

Zwischen der Öffnung 2 und dem Boden 3 sind Seitenwandungen 5 ausgebildet, auf deren Form noch im Einzelnen in Zusammenschau mit den weiteren Figuren eingegangen werden wird.

Um die Öffnung 2 herum ist hier beispielhaft ein Gewinde 6 ausgebildet, auf das ein Deckel aufgeschraubt werden kann.

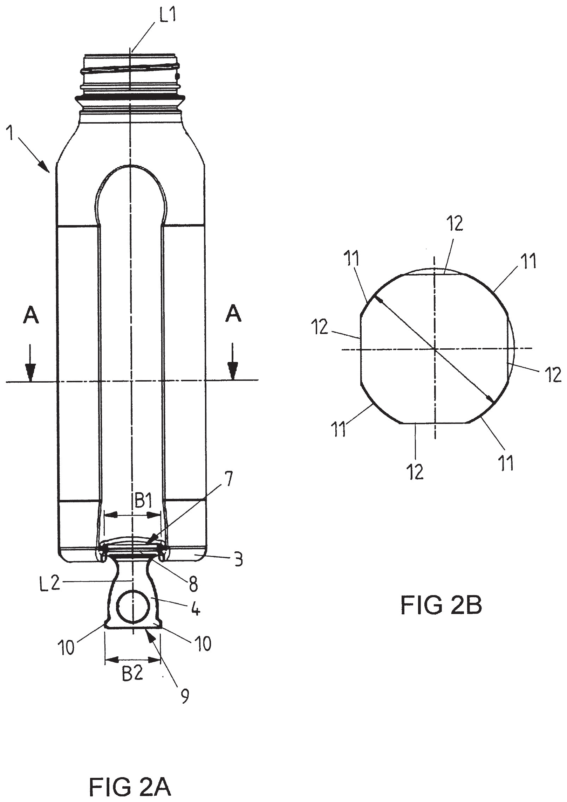

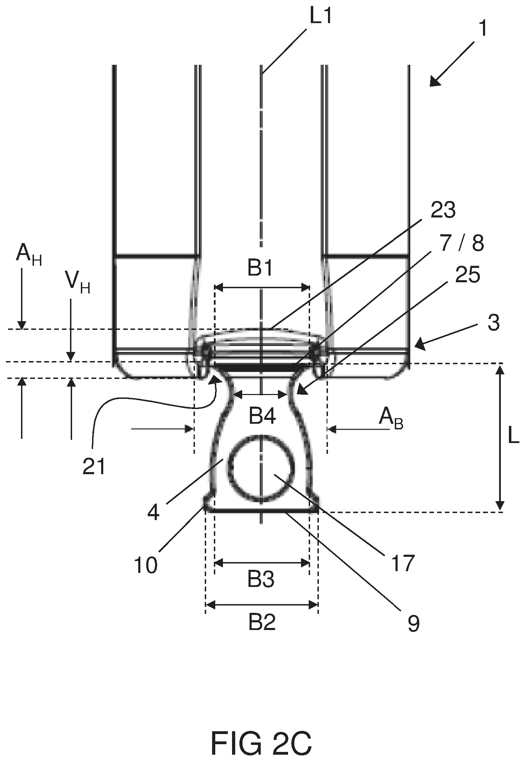

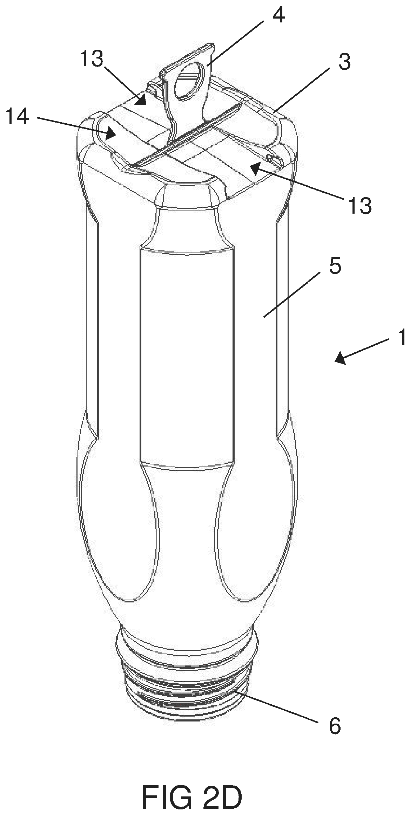

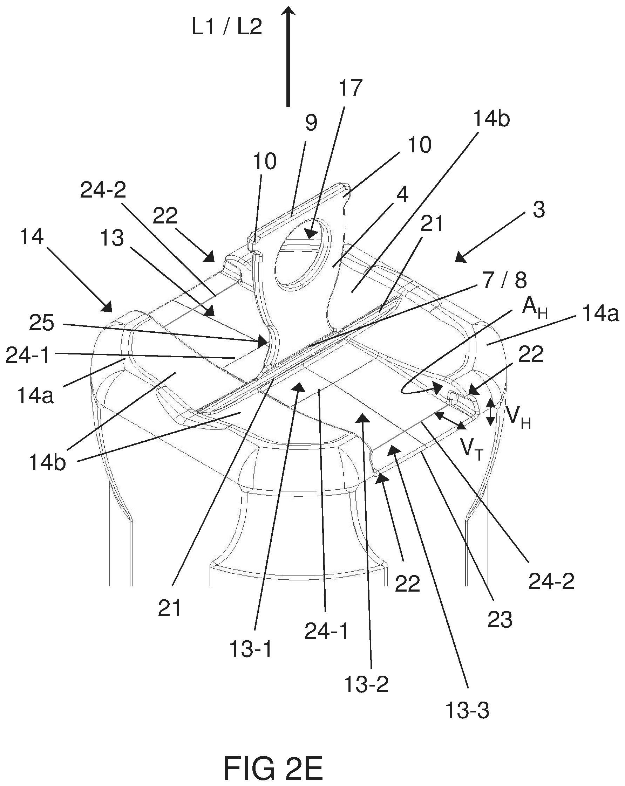

In der Figur 2A ist die Flasche 1 aus Figur 1 in einer seitlichen Ansicht dargestellt. Figur 2C zeigt hierzu noch eine vergrößerte Darstellung des Bodenbereichs und des Hängers 4. Die Figuren 2D und 2E zeigen noch einmal den Bodenbereich der Flasche 1 mit dem am Boden 3 angeformten Hänger 4 in einer perspektivischen Detailansicht. In dieser Ansicht ist gut zu sehen, dass sich der Hänger 4 im ausgeklappten Zustand entlang einer zweiten Längserstreckungsrichtung L2 erstreckt, die im Falle der Darstellung der Figur 2A identisch mit der ersten Längserstreckungsrichtung L1 der Flasche 1 ist. Die Länge L des Hängers 4 beträgt 25 mm bis 35 mm. Die Dicke des Hängers 4, insbesondere im Bereich der Öffnung 17, beträgt etwa 1,5 mm bis 3 mm.

Im Bodenbereich der Flasche 1 befindet sich der Aufnahmebereich 13 für den Hänger 4. Der Aufnahmebereich 13 ist hier als eine Vertiefung im Boden 3 der Flasche 1 ausgeführt. Er kann sich in einer Richtung über die gesamte Breite der Flasche 1 erstrecken. In dem vorliegenden Beispiel sind zwei Aufnahmebereiche 13 vorgesehen. Der Hänger 4 weist ein erstes Ende 7 auf, das im Bereich des Bodens 3 der Flasche 1 angeordnet ist. Dabei ist das erste Ende 7 über ein integral an den Hänger 4 angeformtes Scharnier 8 mit dem Boden 3 verbunden. Dem ersten Ende 7 in der zweiten Längserstreckungsrichtung L2 gegenüberliegend ist ein zweites Ende 9 des Hängers 4 ausgebildet.

Das Scharnier 8 ist ein sogenanntes Folienscharnier. Die Dicke des Scharniers 8 beträgt etwa 0,2 mm bis 0,6 mm. Es erstreckt sich quer zur zweiten Längserstreckungsrichtung L2 über eine erste Breite B1. Diese erste Breite B1 kann im Wesentlichen einer zweiten Breite B2, über die sich das zweite freie Ende 9 des Hängers 4 quer zur zweiten Längserstreckungsrichtung L2 erstreckt, entsprechen. Damit ist der Hänger 4 insgesamt kompakt ausgestaltet und weist einander in ihrer Breite B1, B2 entsprechende Enden 7, 9 auf. Die Breite B1 des Scharniers 8 beträgt 14 mm bis 21 mm. Die Breite B2 des freien Endes 9 vom Hänger 4 beträgt 20 mm bis 26 mm. Vorzugsweise ist B1 kleiner als B2.

Das Scharnier 8 des Hängers 4 setzt hier nicht direkt am Boden 3 der Flasche 1 an. Das Scharnier 8 ist auf eine Art Sockel 21 angeordnet, der den Übergang zum Boden 3 der Flasche 1 bereitstellt. In der dargestellten Ausführungsform weist der Sockel 21 an der Seite, an der das Scharnier 8 anschließt, eine Art Grat auf, der sich quer zur Längsachse L1 erstreckt und sich vorzugsweise über den gesamten Aufnahmebereich 13 erstreckt. Dadurch wird insbesondere das Lösen des Hängers 4 aus seiner fixierten, ersten Position erleichtert (siehe dazu nachfolgend).

Am zweiten Ende 9 des Hängers 4 sind, insbesondere über eine Verringerung der Breite des Hängers 4 in Richtung des Scharniers 8, zwei seitliche, beispielsweise kuppen- oder nasenartige, Vorsprünge 10 ausgebildet. Die gegenüber B2 verringerte Breite B3 liegt in einem Bereich von 17 mm bis 23 mm. Ein Vorsprung kann dabei eine Breite von 0,5 mm bis 3 mm besitzen. Über die beiden Vorsprünge 10 kann der Hänger 4 am Boden 3 bzw. im Aufnahmebereich 13 fixiert werden, wenn er in die erste Position überführt werden soll, in der er sich im Wesentlichen entlang des Bodens 3 erstreckt. In den Figuren 2A bis 2E ist der Hänger 4 in seiner zweiten Position dargestellt, in der er sich winklig von dem Boden 3 weg erstreckt. Im Falle der Darstellung der genannten Figuren steht der Hänger 4 im Wesentlichen senkrecht vom Boden 3 ab.

Der Aufnahmebereich 13 weist seitliche Vertiefungen 22 zur Aufnahme der beiden Vorsprünge 10 des Hängers 4 auf. Insbesondere weist der Aufnahmebereich 13 an beiden Seiten jeweils eine Vertiefung 22 auf. Im ersten Zustand des Hängers 4 greifen die beiden Vorsprünge 10 in die Vertiefungen 22 ein. Damit ist der Hänger 4 in seiner ersten Position lösbar fixiert. Die Vertiefungen 22 besitzen beispielsweise eine Höhe V_{H} von 1 mm bis 7 mm und/oder eine Tiefe V_{T} von 2 mm bis 10 mm. Insbesondere werden die Vorsprünge 10 einschnappend in den Vertiefungen 22 festgelegt. Die Vorsprünge 10 und die hier seitlichen Vertiefungen 22 bilden die Verbindungseinrichtung zum lösbaren Fixieren des Hängers 4 in dem Aufnahmebereich 13.

Vorzugsweise ist der Hänger 4 in seiner ersten Position nicht starr sondern beweglich fixiert. Dies wird insbesondere dadurch erreicht, dass zumindest die Dicke des freien Endes 9, insbesondere des gesamten Hängers 4, kleiner gewählt ist als die Höhe A_{H} des Aufnahmebereichs 13 für den Hänger 4 und/oder dass das Scharnier 8 des Hängers 4 nicht im direkt am Boden 3 der Flasche sondern auf dem Sockel 21 ansetzt. Insbesondere ist auch dazu die Dicke des freien Endes 9 kleiner gewählt als die Höhe V_{H} der Vertiefungen 22. Dadurch wird insbesondere das Lösen des Hängers 4 aus seiner ersten Position erleichtert, da ein manueller Eingriff zwischen dem Hänger 4 und dem Boden 3 erleichtert wird.

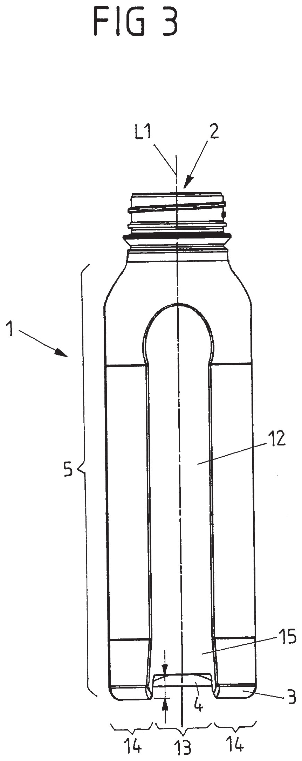

Um das manuelle Eingreifen, beispielsweise mittels einer Fingerkuppe und/der eines Fingernagels, in den Aufnahmebereich 13 zum Lösen des Hängers 4 aus seiner fixierten, ersten Position noch weiter zu unterstützen, können noch weitere bauliche Maßnahmen vorgenommen werden. Beispielsweise ist hier zumindest die obere äußere Kante 23 des Aufnahmebereichs 13 konkav und insbesondere gekrümmt ausgeführt (siehe Figur 2C). Dadurch kann leichter auf den Hänger 4 zugegriffen werden, um ihn von der in der Figur 3 dargestellten ersten Position in seine zweite Position zu überführen (siehe Figur 2A).

In einer Ausführungsform besitzt der Aufnahmebereich 13 eine von der Außenseite zur Längsachse L1 der Flasche 1 hin abnehmende Höhe A_{H} (siehe Figur 2E). Dadurch kann das Überführen des Hängers 4 aus seiner ersten, fixierten Position in seine zweite, abstehende Position noch weiter unterstützt werden. In dem dargestellten Ausführungsbeispiel ist in dem Aufnahmebereich 13 ein innerer Knick 24-1 und zur Außenseite des Behältnisses 1 hin noch ein zweiter äußerer Knick 24-2 vorgesehen. Der Aufnahmebereich 13 wird hier somit durch drei Abschnitte 13-1, 13-2 und 13-2 bereitgestellt. Der erste innere Abschnitt 13-1 verläuft im Wesentlichen quer, vorzugsweise senkrecht, zu der Behälterlängsachse L1. Über den ersten Knick 12-1 geht der erste innere Abschnitt 13-1 in einen zweiten mittleren Abschnitt 13-2 über. Der innere erste Knick 24-1 ist in einem Abstand von 5 mm bis 10 mm zum Sockel 21 positioniert. Der zweite mittlere Abschnitt 13-2 bildet eine, vorzugsweise gerade, Rampe. Die Höhe A_{H} des Aufnahmebereichs 13 ist hier zur Außenseite des Behältnisses 1 hin ansteigend. Der zweite äußere Knick 24-2 befindet sich in etwa im Bereich der hinteren Kante des Aufnahmebereichs 22. Der äußere dritte Abschnitt 13-3 bildet hier eine kürzere Rampe mit größerer Steigung. Die Höhe A_{H} des Aufnahmebereichs 13 wird somit zur Außenseite hin noch weiter vergrößert. Dadurch kann das Lösen des Hängers 4 aus seiner fixierten ersten Position noch weiter unterstützt werden. Zum Beispiel besitzt der Aufnahmebereich 13 an der Außenseite der Flasche 1 eine Höhe A_{H} von 6 mm bis 13 mm. Die Höhe A_{H} verringert sich zu Längsachse L1 hin beispielsweise auf einen Wert von 0,5 mm bis 5 mm. Die Breite A_{B} des Aufnahmebereichs 13 mit den Vertiefungen 22 liegt zwischen 20 mm und 30 mm. Ohne die Vertiefungen 22 verringert sich die Breite A_{B} um etwa 0,5 mm bis 4 mm. Eine Vertiefung 22 kann dabei eine Breite von 0,25 mm bis 2 mm besitzen. Die Breite B₂ des Hängers 4 an seinem freien Ende 9 ist größer als die Breite A_{B} des Aufnahmebereichs 13 ohne die Vertiefungen 22 aber kleiner als die Breite A_{B} des Aufnahmebereichs 13 mit den Vertiefungen 22. Damit bleibt die lösbare Fixierung aber auch die Beweglichkeit des Hängers 4 in seiner ersten fixierten Position erhalten. Der erste Knick 24-1 und/oder der zweite Knick 24-2 können durch einen winkligen Übergang oder durch einen abgerundeten Übergang bereitgestellt werden.

Vorzugsweist ist zwischen dem freien Ende 9 und dem Scharnier 8 des Hängers 4 noch ein Bereich 25 ausgebildet, welcher eine Einschnürung oder Einbuchtung aufweist. Dieser ist hier zwischen der Öffnung 17 und dem Scharnier 8 angeordnet. Dieser Bereich 25 besitzt eine gegenüber dem Scharnier 8 und dem freien Ende 9 des Hängers 4 reduzierte Breite B4. Vorzugsweise liegt die Breite B4 in einem Bereich von 10 mm bis 16 mm. Diese Einbuchtung stellt eine Art Griffbereich 25, beispielsweise für den Zeigefinger und den Daumen, bereit und kann das Aufhängen der Flasche 1 unterstützen. Die Einschnürung 25 ist hier konkav oder zumindest abschnittsweise konkav ausgebildet. Die nach innen gewölbte Einschnürung 25 ermöglicht zum Beispiel in der ersten Position des Hängers 4 ein Eingreifen mittels der Finger. Der Hänger 4 besitzt eine von dem Aufnahmebereich 13 für den Hänger 4 abweichende Form, insbesondere auch durch diese Einschnürung 25.

In dem dargestellten Ausführungsbeispiel ist die Flasche 1, mit Ausnahme des Hängers 4, im Wesentlichen spiegelsymmetrisch aufgebaut. Auf beiden Seiten des Scharniers 8 werden zwei Aufnahmebereiche 13 für den Hänger 4 bereitgestellt. Diese sind hier im Wesentlichen gleich ausgebildet.

Die Figur 2B zeigt eine Querschnittsdarstellung der Flasche der Figur 2A entlang der Linie A-A der Figur 2A, welche in einem mittigen Bereich der Flasche 1 verläuft. In dieser Querschnittsdarstellung ist zu sehen, dass sich der Querschnitt aus einander abwechselnden (alternierenden) konvex gekrümmten (also nach außen gewölbt) Abschnitten 11 und geraden Abschnitten 12 zusammensetzt. Dabei liegen jeweils zwei konvex gekrümmte Abschnitte und jeweils zwei gerade Abschnitte 12 einander gegenüber. Die geraden Abschnitten 12 bilden im Wesentlichen die Seitenwände 5 der Flasche 1. Die konvex gekrümmten Abschnitte 11 bilden im Wesentlichen die Ecken der Flasche 1. Die obere konkave Kante 23 ist im Wesentlichen im Bereich der geraden Abschnitte 12 angeordnet. Insbesondere ist der Aufnahmebereich 13 im Wesentlichen im Bereich der geraden Abschnitte 12 angeordnet.

Die Figur 3 zeigt die Flasche 1 der Figur 2A abermals in einer seitlichen Ansicht, wobei der Hänger 4 (in der Figur vereinfacht dargestellt) nun in seiner ersten Position, die einer Lagerposition entspricht, in dem Aufnahmebereich 13 des Bodens 3 verstaut ist. Dadurch kann die Flasche 1 sicher auf dem Boden 3 stehen, ohne dass der Hänger 4 stören würde. Die Öffnung 2 befindet sich dabei nach oben gerichtet, das heißt, die Flasche 1 befindet sich in einer aufrechten Position.

Der Hänger 4 schließt in dem in den Figuren gezeigten Ausführungsbeispiel nicht bündig mit einer Unterseite der übrigen Abschnitte 14 des Bodens 3 ab, sondern ist gegenüber diesen übrigen Abschnitten 14 etwas nach oben zum Flascheninneren versetzt (siehe dazu z.B. die Figuren 2E und 3). Diese übrigen Abschnitte 14 des Bodens 3 umfassen den Fußbereich 14a der Flasche 1. Der Fußbereich 14a wird durch den äußeren Bereich oder den Randbereich des Bodens 3 bereitgestellt (siehe dazu die Figur 2E). Der Fußbereich 14a wird in dem dargestellten Beispiel durch vier Füße 14a gebildet. Sie erstrecken sich jeweils über eine Ecke im Boden 3. Zudem weist der Boden 3 eine Mulde 14b auf, durch welche sich der Aufnahmebereich 13 für den Hänger 4 erstreckt. Die Mulde 14b wird durch den Aufnahmebereich 13, vorzugsweise mittig, geteilt. Der Aufnahmebereich 13 ist gegenüber dem Boden der Mulde 14b in Richtung der Öffnung 2 des Behältnisses 1 nach oben versetzt. Die Mulde erstreckt sich hier von dem die Füße 14a bildenden äußeren Bereich des Bodens 3 zur Mitte des Bodens 3 hin. Die Mulde 14b stellt einen Bereich zum Eingreifen und/oder Führen der Finger bereit, Dadurch kann das Greifen des Hängers 4, beispielsweise mittels des Daumens und Zeigefingers, unterstützt werden. Um insbesondere die Stabilität des Hängers 4 erhöhen, erstreckt sich der Sockel 21 von der einen Seite der Mulde 14b über den Aufnahmebereich 13 hinweg bis zur anderen Seite der Mulde 14b. Die genaue Anordnung des Hängers 4 im Aufnahmebereich 13 wird durch die Höhendifferenz vorgegeben, um die der Boden des Aufnahmebereichs 13 entlang der ersten Längserstreckungsrichtung L1 gegenüber den übrigen Bereichen 14 des Bodens 3 zurückversetzt ist (siehe dazu in der vorangegangenen Beschreibung).

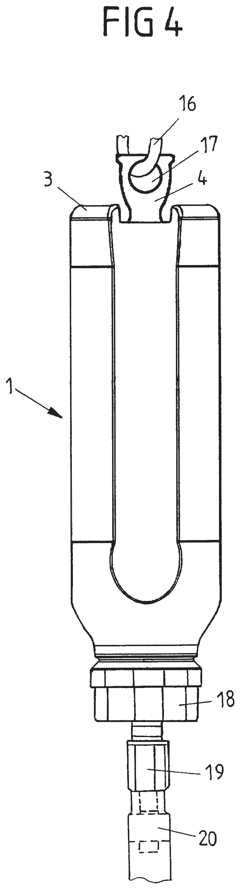

In der Figur 4 ist die Flasche 1 der Figur 3 in ihrem Verwendungszustand gezeigt. In diesem Zustand befindet sich der Hänger 4 in seiner zweiten Position, das heißt, er steht winklig von dem Boden 3 der Flasche 1 ab. Dabei greift ein Haken 16, der als Aufhängevorrichtung dient, durch ein Loch 17, welches als Durchbruch in dem Hänger 4 ausgebildet ist. Die Flasche 1 ist dabei derart angeordnet, dass ihre Öffnung 2 nach unten weist. Dabei ist das Gewinde (vgl. Figur 1) von einem Deckel 18 überdeckt, der einen Anschluss 19 für ein Überleitsystem 20 aufweist. Durch das Überleitsystem 20 kann eine in der Flasche 1 befindliche enterale Nährstofflösung einem Patienten zugeführt werden. Dabei kann die Nährstofflösung aufgrund der Anordnung der Flasche mit der Öffnung nach unten durch die Schwerkraft aus der Flasche 1 austreten.

Falls eine Unterbrechung der Nährstoffzufuhr gewünscht ist, kann beispielsweise ein Ventil im Überleitsystem 20 geschlossen werden. Alternativ ist es auch möglich, die Flasche 1 von dem Haken 16 zu entfernen, den Hänger 4 von seiner in der Figur 4 dargestellten zweiten Position in die in der Figur 3 dargestellte erste Position zu überführen und die Flasche mit dem Boden 3 auf einen entsprechenden Untergrund zu stellen, sodass die Öffnung der Flasche wieder nach oben weist.

Das Volumen der Flasche 1 kann in einem Bereich von 150 ml bis 1000 ml liegen, sodass eine ausreichend große Menge an enteraler Nährstofflösung in der Flasche 1 vorgehalten werden kann. Das Volumen der in den Figuren gezeigten Flasche 1 beträgt beispielsweise 500 ml.

### Bezugszeichenliste

- 1: Behältnis oder Flasche
- 2: Öffnung
- 3: Boden
- 4: Hänger oder Aufhängelement
- 5: Seitenwandungen
- 6: Gewinde
- 7: erstes Ende des Hängers
- 8: Scharnier
- 9: zweites Ende des Hängers
- 10: Vorsprung
- 11: konvexer Abschnitt
- 12: gerader Abschnitt
- 13: Aufnahmebereich des Bodens
- 13-1: Erster innerer Abschnitt des Aufnahmebereichs 13
- 13-2: Zweiter mittlerer Abschnitt des Aufnahmebereichs 13
- 13-3: Dritter äußerer Abschnitt des Aufnahmebereichs 13
- 14: übriger Bereich des Bodens
- 14a: Fußbereich oder Füße
- 14b: Mulde oder Griffmulde
- 15: konkaver Abschnitt
- 16: Haken
- 17: Loch
- 18: Deckel
- 19: Anschluss
- 20: Überleitsystem
- 21: Sockel für das Scharnier 8
- 22: Vertiefung oder Aufnahmebereich für die Vorsprünge 10
- 23: Obere äußere Kante des Aufnahmebereichs 13
- 24-1: Erster innerer Knick im Boden des Aufnahmebereichs 13
- 24-2: Zweiter äußerer Knick im Boden des Aufnahmebereichs 13
- 25: Einschnürung oder Griffbereich im Hänger 4
- B1: Breite des Scharniers 8
- B2: Breite des Hängers 4 am zweiten freien Ende 9
- B3: Breite des Hängers 4 unterhalb der Vorsprünge 10
- B4: Breite des Griffbereichs 25 am Hänger 4
- L: Länge des Hängers 4
- A_{H}: Höhe des Aufnahmebereichs an der Außenseite
- A_{B}: Breite des Aufnahmebereichs an der Außenseite
- L1: erste Längserstreckungsrichtung (der Flasche)
- L2: zweite Längserstreckungsrichtung (des Hängers)
- V_{H}: Höhe der Vertiefung 22
- V_{T}: Tiefe der Vertiefung 22

## Patentansprüche

1. Behältnis (1) zur Aufnahme einer enteralen Nährstofflösung, mit
- einer Öffnung (2), über die eine enterale Nährstofflösung in das Behältnis (1) hinein oder aus dem Behältnis (1) heraus gebracht werden kann,
- einem Boden (3), der der Öffnung (2) in einer Längserstreckungsrichtung (L1) des Behältnisses (1) gegenüberliegt und der dazu dient, das Behältnis (1) auf einem Untergrund aufrecht abzustellen,
- einem an dem Boden (3) angeordneten Aufhängelement (4), das in einer ersten Position, in der es sich im Wesentlichen entlang des Bodens (3) erstreckt, oder in einer zweiten Position, in der es winklig von der durch den Boden (3) definierten Ebene absteht, vorliegen kann,
- einer Scharniereinrichtung (8), die das Aufhängelement (4) an einem ersten Ende (7) des Aufhängelements mit dem Boden (3) verbindet und die dafür vorgesehen und eingerichtet ist, dass das Aufhängelement (4) von der ersten Position in die zweite Position überführt werden kann, wobei
in dem Boden ein Aufnahmebereich (13) für das Aufhängelement (4) ausgebildet ist, in welchem das Aufhängelement (4) in der ersten Position mittels einer Verbindungseinrichtung (10, 22) lösbar fixiert werden kann, wobei das Aufhängelement (4) in der ersten Position nicht starr sondern innerhalb der ersten Position beweglich fixiert ist und ein zweites freies Ende (9) des Aufhängelements (4) von oben nach unten bewegbar ist.

2. Behältnis (1) nach Anspruch 1, **dadurch gekennzeichnet, dass** die Verbindungseinrichtung (10, 22) durch eine Schnappverbindung bereitgestellt ist.

3. Behältnis (1) nach Anspruch 1 oder 2, **dadurch gekennzeichnet, dass** zur Bereitstellung der Verbindungseinrichtung (10, 22) das Aufhängelement (4) in einem Bereich seines zweiten Endes (9) mindestens einen Vorsprung (10) aufweist, der dazu vorgesehen und eingerichtet ist, eine Struktur (22) des Aufnahmebereichs (13) zu hintergreifen, um das Aufhängelement (4) in der ersten Position zu fixieren, insbesondere wobei die Struktur (22) durch eine seitliche Vertiefung (22) in dem Aufnahmebereich (13) bereitgestellt ist.

4. Behältnis (1) nach einem der vorhergehenden Ansprüche, **dadurch gekennzeichnet, dass** das Scharnier (8) auf einem Sockel (21), der den Übergang zu dem Boden (3) des Behältnisses (1) bereitstellt, angeordnet ist, wobei der Sockel (21) einen Grat aufweist, an welchem das Scharnier (8) ansetzt.

5. Behältnis (1) nach einem der vorhergehenden Ansprüche, **dadurch gekennzeichnet, dass** zwischen dem zweiten, freien Ende (9) des Aufhängelementes (4) und dem Scharnier (8) eine, vorzugsweise zumindest abschnittsweise konkave, Einschnürung (25) ausgebildet ist.

6. Behältnis (1) nach einem der vorhergehenden Ansprüche, **dadurch gekennzeichnet, dass** in einem äußeren Bereich des Bodens (3) ein Fußbereich (14a) zum Aufstellen der Flasche ausgebildet ist und/oder in dem Boden (3), vorzugsweise ausgehend von dem Fußbereich (14a), eine Mulde (14b) ausgebildet ist, durch welche sich der Aufnahmebereich (13) für den Hänger (4) erstreckt.

7. Behältnis (1) nach einem der vorhergehenden Ansprüche, **dadurch gekennzeichnet, dass** der Aufnahmebereich (13) für das Aufhängelement (4) eine von einer Außenseite zur Längsachse (L1) des Behältnisses (1) hin abnehmende Höhe (A_{H}) besitzt.

8. Behältnis (1) nach einem der vorhergehenden Ansprüche, **dadurch gekennzeichnet, dass** der Aufnahmebereich (13) einen inneren ersten Knick (24-1) und zur Außenseite des Behältnisses (1) hin einen zweiten Knick (24-2) aufweist, insbesondere jeweils in Richtung der Öffnung (2) des Behältnisses (1) hin.

9. Behältnis (1) nach einem der vorhergehenden Ansprüche, **dadurch gekennzeichnet, dass** eine obere Kante (23) des Aufnahmebereichs (13) zumindest abschnittsweise konkav ausgeführt ist.

10. Behältnis (1) nach einem der vorhergehenden Ansprüche, **dadurch gekennzeichnet, dass** das Behältnis (1) zumindest in einem in seiner Längserstreckungsrichtung (L1) dem Boden (3) zugewandten Abschnitt einen Querschnitt aufweist, der konvex gekrümmte Abschnitte (11) und mindestens einen konkav gekrümmten Abschnitt (15) in alternierender Anordnung aufweist und insbesondere sich das Aufhängelement (4) in seiner ersten Position zwischen zwei einander gegenüberliegenden konkav gekrümmten Abschnitten (15) erstreckt.

11. Behältnis (1) nach einem der vorhergehenden Ansprüche, **dadurch gekennzeichnet, dass** sich die Scharniereinrichtung (8) über eine Breite (B1) erstreckt, die kleiner ist als die Breite (B2) des zweiten Endes (9) des Aufhängelementes (4).

12. Behältnis (1) nach einem der vorhergehenden Ansprüche, **dadurch gekennzeichnet, dass** das Behältnis (1), das Aufhängelement (4), die Scharniereinrichtung (8) und insbesondere der Sockel (21) einstückig ausgebildet sind.

13. Behältnis (1) nach einem der vorhergehenden Ansprüche, **dadurch gekennzeichnet, dass** das Behältnis (1) zumindest in einem in seiner Längserstreckungsrichtung (L₁) mittleren Abschnitt einen Querschnitt aufweist, der konvex gekrümmte Abschnitte (11) und gerade Abschnitte (12) in alternierender Anordnung aufweist, insbesondere wobei die geraden Abschnitte (12) eine Breite aufweisen, die in einem zwischen dem mittleren Abschnitt des Behältnisses (1) und der Öffnung (2) des Behältnisses (1) liegenden Abschnitt größer ist als im mittleren Abschnitt.

14. Behältnis (1) nach Anspruch 13, **dadurch gekennzeichnet, dass** das Behältnis (1) zumindest in einem in seiner Längserstreckungsrichtung (L1) dem Boden (3) zugewandten Abschnitt einen Querschnitt aufweist, der konvex gekrümmte Abschnitte (11) und mindestens einen konkav gekrümmten Abschnitt (15) in alternierender Anordnung aufweist.

15. Behältnis (1) nach einem der vorhergehenden Ansprüche, **dadurch gekennzeichnet, dass** ein erster und ein zweiter Aufnahmebereich (13) für das Aufhängelement (4) in dem Boden (3) des Behältnisses (1) ausgebildet sind und das Aufhängelement (4) von dem ersten in den zweiten Aufnahmebereich (13) und wieder zurück bewegbar ist, insbesondere wobei der erste und der zweite Aufnahmebereich (13) gegenüberliegend angeordnet und/oder im Wesentlichen gleich ausgeführt sind.
